# EUROPEAN PATENT SPECIFICATION

(11) **EP 1 317 808 B1**
(45) Date of publication and mention of the grant of the patent: **06.07.2005**
(21) Application number: 01963641.4
(22) Date of filing: 23.08.2001
(51) Int. Cl.: H04J 3/16, H04L 5/22, H04Q 11/04

(54) **METHOD AND ARRANGEMENT FOR FORMING DATA STREAMS**
VERFAHREN UND ANORDNUNG ZUR BILDUNG VON DATENSTRÖMEN
PROCEDE ET DISPOSITIF POUR FORMER DES FLUX DE DONNEES

(30) Priority: 24.08.2000 SE 0003004
(43) Date of publication of application: 11.06.2003
(73) Proprietor: Telefonaktiebolaget LM Ericsson (publ), 164 83 Stockholm (SE)
(72) Inventor: HANSSON, Allan, S-117 40 Stockholm (SE); SANDER, Herbert, S-133 44 Saltsjöbaden (SE); TÖNNBY, Ingmar, S-114 36 Stockholm (SE)
(74) Representative: Sjöberg, Mats Hakan
(86) International application number: PCT/SE2001/001796
(87) International publication number: WO 2002/017528

(56) References cited:
- EP-A2- 0 428 407
- EP-A2- 0 818 900
- WO-A2-00/21251
- WO-A2-99/55036
- US-A- 5 644 576

## Description

### Field of invention

The present invention relates to a method and to an arrangement for forming continuously a selectable array of outgoing data streams on the basis of a selectable array of incoming data streams.

### Description of the background art

It has long been known to use switching to transfer data streams arriving at a switch via a number of incoming links to a number of outgoing links.

Two time perspectives can be referred to in conjunction with switching, these being control time and stream time. Different connections are established in the control time, and it is determined how incoming data streams shall be handled to form outgoing data streams. Incoming data streams shall be handled in the stream time in accordance with what has been determined in the control time.

It is known to use a set of control rules that determine how the various data streams shall be transmitted between incoming and outgoing links associated the switch. These rules are set up in the control time.

The term data streams is not normally used, for instance, in systems that use deterministic time division, the central terms in such cases being channels that are allocated one or more time slots in a time frame. These channels can be considered to carry data streams. A time frame is a periodically recurring primary interval that has a defined internal structure in the form of time slots. The stream membership for different data bits in a channel is defined in the control time by the positions of the different time slots within a time frame.

When switching data streams, the information in time slots in incoming time frames is transferred to intended time slots in outgoing time frames in said stream time, in accordance with predetermined switching control rules.

In the case of one or more incoming links of 2 Mb/s, for example, these links are demultiplexed to a number of incoming channels of 64 kb/s. These channels are switched to a number of outgoing channels, still of 64 kb/s, which are multiplexed together to form one or more outgoing links of 2 Mb/s. Demultiplexing, switching and multiplexing thus take place in different mutually separated stages.

When a change shall be made as to how a reorganisation shall take place, such as when a data stream shall be added or removed, or when a data stream shall be added or removed in conjunction with multicasting, the change is made in the control time through the medium of a control process in conjunction with concerned units, such as the switch, the transmitter and the receiver respectively. It is also known to use a control unit for controlling and steering the control procedure.

Thus, control time and data stream time are well defined and separate from each other in connection with time division.

In data packet handling, each data packet carries a header, which includes, among other things, information relating to the address to which the data packet shall be sent. Local rules in the switch determine how a data packet containing given address information shall be handled.

The data packet belonging to an information flow from a transmitter to a receiver represents a data stream. In a connectionless network, such as in the case of Internet protocol (IP), the separate packets can be handled as individual packets independently of each other when they shall be transported through the network, and two data packets belonging to one and the same data stream can be transported along different paths through the network, depending on prevailing network conditions. In this case, each incoming packet is handled by a network router in accordance with the address information carried by the packet. In this regard, it can be said that the control time lies in the data stream time, since the packet *per* se carries control information that is interpreted in the router.

A control process can also be used in conjunction with data packet handling, for establishing and handling connections in a control period. This takes place within connection orientated systems, such as X.25 and ATM, in which the control time includes handling of those rules which control how a data packet shall be handled within a switch.

Data streams can also be multiplexed, in other words a data stream can carry a plurality of carried data streams. There is used in this description such terms as carrying data streams and carried data streams respectively, implying that a number of carried data streams are carried by a carrying, and thus multiplexed, data stream. A non-carrying data stream is referred to in this description as a simple data stream.

The term recursive multiplexing is also used in this description, by which is meant that a carried data stream may also constitute a multiplexed carrying data stream and thus carry other carried data streams. Recursive multiplexing also means that the same principles can be applied for interpreting the content of a data stream on all recursion levels.

This means that an ATM-cell, which *per se* may carry a number of mini-cells, does not constitute an example of a recursively multiplexed data stream according to the definition used in this description. This is because the same principles cannot be applied to interpret both an ATM-cell and a mini-cell, since it must be known whether the subject to be interpreted consists of an ATM-cell or a mini-cell before interpretation can commence.
In the patent US 5644576 A1 is disclosed a system for receiving a burst of high load of both speech and data and for coordinating the utilization of the bandwidth in a cell. This is achieved by using variable lengths on the frames for transmission of the information. The system includes a technique for adjusting frame length and a mix of control and data channels in a flexible and dynamic manner. All the frames have a header that describes the frame structure. Transmitting and receiving nodes in the system, base stations, build up tables that are used to arrange the time slots in the frames in accordance with the structure given in the frame header. The frame is thus described in the frame header. The table does not describe the frame itself but is a "slot train table" that is used by the base station to give the predetermined sequence of time slots in accordance with the structure in the frame header.

### Summary of the present invention

### Technical problems

When considering the present state of the art as described above and when taking a starting point from a method and an arrangement for forming continuously a selectable array of outgoing data streams from a selectable array of incoming data streams, it will be seen that there exist various technical problems of mutually different degrees of difficulty, depending on whether data packet handling or deterministic time sharing is applied.

For example, a technical problem resides in the handling of data streams of arbitrary bandwidth.

A further technical problem resides in flexibly changing the number of incoming data streams without losing data.

Another technical a problem is one of handling finite data streams or bursts of data streams without losing data or without the occurrence of unused transmission capacity.

Another technical problem is one of handling multiplexed streams recursively with a selective recursion depth.

Yet another technical problem resides in handling both unicast and multicast in a simple fashion.

Yet another technical problem is one of utilising all of the available transmission capacity in connection with variable transmission requirements of transmitted data streams.

Another technical problem is one of guaranteeing high service quality in a highly loaded network.

Finally, a technical problem exists in providing a solution for all of the aforesaid technical problems with one and the same method or arrangement.

### Solution

The term frame multiplexing is used in connection with the described problem solution. Frame multiplexing is a principle on which the present invention is based.

This principle is described in detail in Swedish Patent Application SE-9903808-5. This principle is therefore only described partially in the instant application, and a more complete description of said principle is found in the aforesaid Swedish patent application.

In this description, a data stream is defined as a time-ordered sequence of interrelated data stream elements that can be handled in a repetitive sequence.

By table-operated device as used in this document is meant a device which handles data streams through the medium of tables. These data streams may be simple data streams or carrying data streams. A table describes frames that constitute data stream elements of a carrying data stream and the data stream elements carried by said streams. A table-operated device can separate the data stream elements of a carrying data stream into its components, and/or create new carrying data streams, by forming new data stream elements from other stream elements belonging to carried data streams. A table can be changed or updated in accordance with instructions from a control device.

Table-operated devices can be controlled by many different tables, one for each carrying data stream handled by the device. Each specific table is common to the table-operated devices that shall be capable of handling concerned data streams.

A more detailed description of table-operated devices in general and of the co-action with said control device in conjunction with changes or updating of the frame-describing table in particular is given in Swedish Patent Application SE-9904857-1. Consequently, the instant application will not be laden with a detailed description of the *modus operandi* of the control device and its co-action with table-driven devices.

With the intention of providing a solution to one or more of the aforesaid problems, the present invention takes as its starting point a method or an arrangement for continuously forming an array of outgoing data streams from a given array of incoming data streams.

The frame format of tables is described in a table-operating device. The frame can be compiled in different ways, depending on the multiplexing method used:
1. The frame may be compiled in accordance with the frame multiplexing principle descnbed in Swedish Patent Application SE-99 03808-5. In this case, the frame includes in the table an index which enables the descnption of the frame concerned to be found. The index may be structured as a pointer plus mask.
2. The frame may be compiled as an STM-frame, such as in the case of time multiplexing, in which case the table will include only one single frame description at a given point in time.
3. The frame may include only one stream element, which can be considered as being a special case of 2 above. In other words, the table is a table that includes only one single frame description, which describes solely a data stream element that includes the entire frame or a part of said frame.

By "continually forming" is meant in this description that incoming data stream elements are identified in data stream time in repetitive sequences in step with data stream elements incoming on incoming links (interface), and directing these incoming data stream elements to be carried by data stream elements on outgoing interfaces, such as to route data streams through the arrangement in accordance with the decision of the control system.

According to the present invention, this can be achieved by describing stream elements belonging to incoming data streams in a first set of tables, and by describing stream elements belonging to outgoing data streams in a second set of tables. The content of these tables is defined by the control system and reflects how data streams shall be routed through the arrangement. Routing is effected in data stream time, by identifying incoming carried stream elements with the aid of the first set of tables, and by arranging a subset of these data stream elements in frames forming outgoing data stream elements, in pursuance of the second set of tables.

According to the present invention, these data streams may be comprised of multiplexed data streams and may be multiplexed recursively, i.e. a carried data stream may itself carry data streams by virtue of its data stream elements forming frames that carry other stream elements. In the case of recursive multiplexing, a carrying data stream has affiliated therewith a table which refers to tables for the data streams carried by said carrying data stream, said carried data streams being carrying data streams in themselves.

With the intention of enabling multiplexed data streams to be handled as simple data streams when not requiring the data streams carried by the carrying data stream to be handled separately, it is proposed in accordance with the invention that the first and the second sets of tables describe the data streams that are included in the respective arrays of incoming and outgoing data streams in all recursion depths to be handled.

With the intention of providing a multicast option, it is proposed in accordance with the invention that data stream elements belonging to a data stream associated with the incoming data streams can be replicated to form stream elements that belong to two or more carried data streams in one or more different carrying data streams belonging to the outgoing data streams.

It is also proposed in accordance with the invention that the validity of the first and the second sets of tables is maintained through the medium of one or more control units. This is effected in the control time. Because the tables may include several different carrying data stream formats at one and the same time, it is possible to handle finite streams, in other words the addition of a new carried stream and the termination of an existing carried stream or the handling of carried streams that have a bandwidth requirement which vanes in data stream time, without consequently losing data and with a possibility of utilising available transmission capacity to the full by choosing a relevant frame format of the data stream from the tables in data stream time.

The tables included in the two sets of tables are frame-describing tables that describe permitted frame structures, wherein each frame includes stream elements belonging to one or more different carried data streams.

According to the present invention, each frame shall also include or be associated with information for pointing out in a table the structure of the frame in question. In this regard, the intention is to enable a correct description of the frame structure to be found in the table.

This is thus an application of frame multiplexing for bringing together data stream elements belonging to one or more different carried data streams in a common frame in a carrying data stream.

According to one preferred embodiment of the present invention, a presence vector can be derived with a starting point from incoming stream elements and the first set of frame-describing tables, said presence vector corresponding to all incoming data streams. Moreover, each permitted frame structure for respective outgoing carrying data streams may be represented by a frame element vector. This those frame structures which shall be used for outgoing data streams in the case of a specific transmission requirement according to incoming data streams to be chosen by matching between available frame element vectors and relevant presence vectors.

According to another preferred embodiment of the present invention, a tree structure can be derived from information for pointing in incoming frames, such as an index tree, and the frame structure for outgoing data streams may be formed directly with a starting point from said tree structure.

With the intention of enabling groups of data stream bursts to be readily handled, it is proposed in accordance with the invention that the information pointing to frames for incoming carrying data streams and/or for outgoing carrying data streams is divided into two parts, where a first part constitutes a reference to a position in associated frame-describing tables and a second part includes a mask whereby said data stream bursts can be defined as being transferable with relevant frame structures

### Advantages

Those advantages primarily associated with a method or an arrangement according to the present invention reside in the possibility of readily switching a number of incoming data streams to form a number of outgoing data streams and therewith the possibility of handling selective bandwidths on incoming data streams, flexible changes in the number of data streams, finite data streams, recursively multiplexed data streams with selective recursion depths, multicasting, and data stream bursts or streams having variable transmission requirements with guaranteed service quality regardless of their degree of utilisation.

### Brief description of the drawings

A method and an arrangement having features characteristic of the present invention will now be descnbed by way of example with reference to the accompanying drawings, in which
- Figure 1: is a schematic and highly simplified illustration of an arrangement for reorganising a first array of data streams to a second array of data streams;
- Figure 2: is a schematic illustration showing how data streams can be recursively multiplexed in each other;
- Figure 3: shows references between tables that describe recursively multi-plexed data streams;
- Figure 4: illustrates how an incoming data stream can be replicated to form a plurality of outgoing data streams;
- Figure 5: is a schematic illustration of a frame that represents a number of data streams in accordance with the frame multiplexing principle;
- Figure 6: is a schematic illustration of the compilation of frame-describing tables and shows how said tables are used to interpret a frame recursively;
- Figure 7: illustrates schematically a first embodiment of a representation of incoming data streams and shows how this representation is used to select the frame structure for outgoing data streams, the use of a presence vector, and a number of frame element vectors;
- Figure 8: illustrates schematically a second embodiment of a representation of incoming data streams and shows how this representation is used to select the frame structure for outgoing data streams, the use of a tree structure; and
- Figure 9: illustrates schematically the division of an index.

### Description of embodiments at present preferred

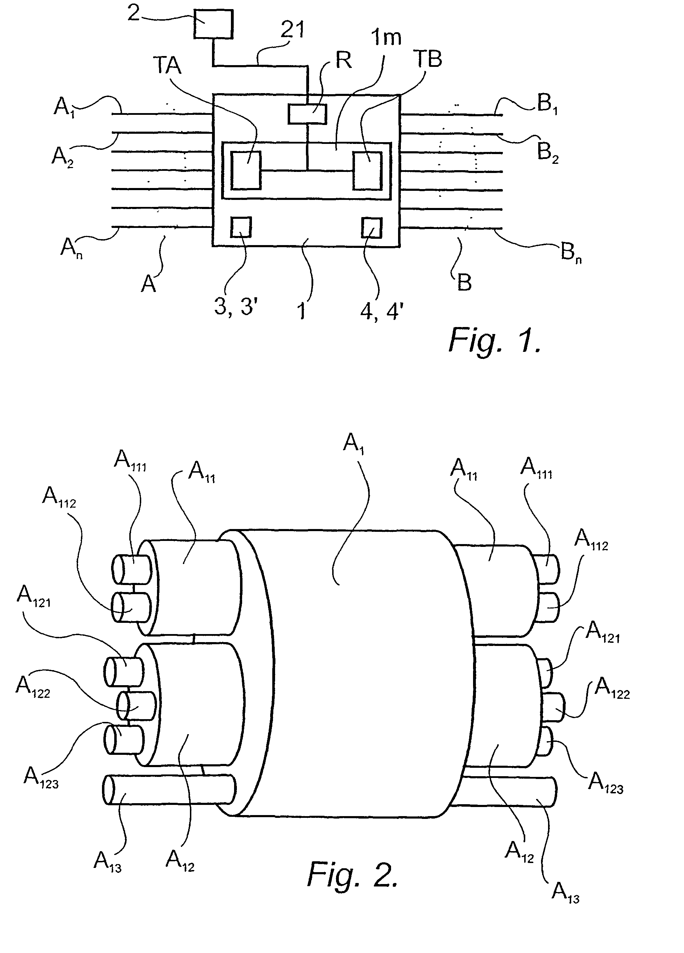

Figure 1 illustrates a method of continuously forming an array of outgoing data streams B from a given array of incoming data streams A.

An arrangement 1 that can form an array of outgoing data streams B in this way is a MUX-switch and the switch will be used as an example of such an arrangement in this description. Other components that handle and form data streams for the representation of data streams can also operate in accordance with this method. Examples of such components are the multiplexor that forms a carrying outgoing data stream with a starting point from an array of incoming data streams, and the demultiplexor that forms an array of outgoing data streams with a starting point from an incoming carrying data stream.

According to the present invention, data stream elements belonging to an array of incoming data streams A are described by a first set of tables TA. Similarly, data stream elements belonging to the array of outgoing data streams B are described by a second set of tables TB.

The first set of tables TA show which possible data streams directly or recursively carried by the data streams A₁, A₂,..., Aₙ can be found among the array of incoming data streams A and how these data streams may be organised. Similarly, the second set of tables TB show which possible data streams directly or recursively carried by the data streams B₁, B₂,..., Bₙ can be found among the array of outgoing data streams B and how these data streams may be organised.

According to the principle of an inventive method as seen generally, but also specifically in respect of a switch, data streams included in the outgoing data streams B are comprised of or include data streams that are included in the incoming data streams A.

Information relating to how data streams can be routed through the arrangement can be derived from the first and the second set of tables TA, TB.

With the aid of the first set of tables TA, it is possible to determine which of these possible data streams in the array of incoming frames in stream-element associated data streams A that are actually represented by stream elements at a given moment in time, while the second set of tables TB makes known how these data streams shall be handled in order to form the array of stream elements belonging to outgoing data streams B.

According to the present invention, these data streams A₁, A₂, Aₙ, B₁, B₂, Bₙ are comprised of multiplexed data streams. Fig. 2 shows that the data stream A₁ carries the carried data streams A₁₁, A₁₂, A₁₃. Data streams can also be multiplexed recursively in each other, in other words a carried data stream A₁₂ may itself carry carried data streams A₁₂₁, A₁₂₂, A₁₂₃.

All data streams are interpreted in the same way, regardless of whether the data stream is a carrying data stream or a simple data stream, and also regardless of the recursion depth. It is not necessary to know if a data stream is carrying or simple before being interpreted, and a true recursion according to the definition of recursion in this description can thus be used. The mutual relationships of the data streams and how they shall be interpreted can be read from the tables.

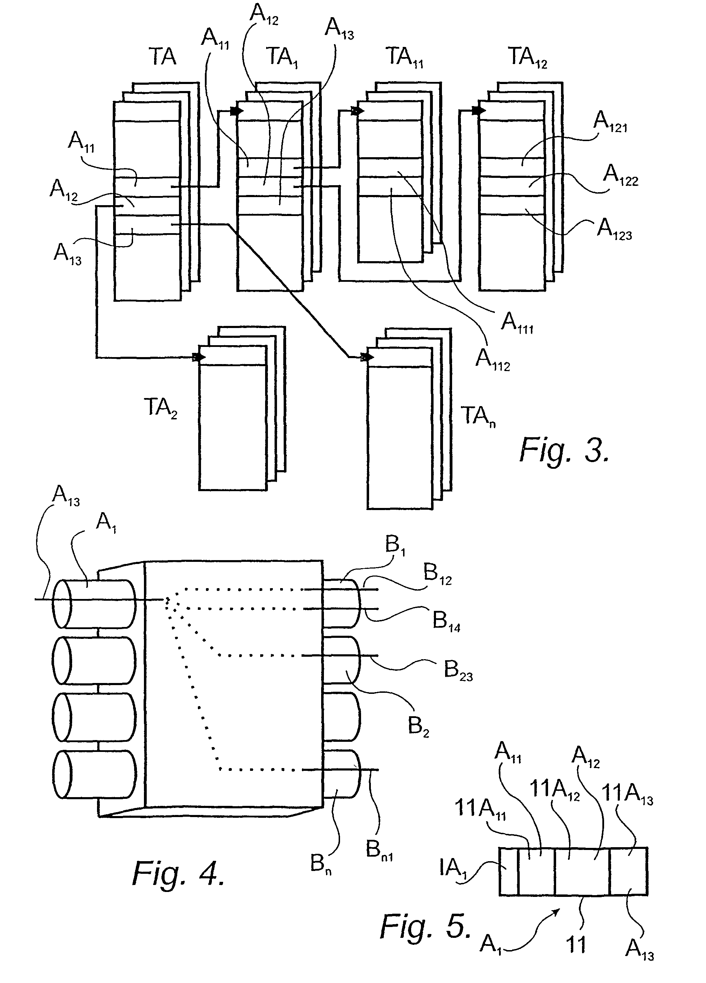

Figure 3 illustrates an example of a first set of tables TA including the tables TA₁, TA₁₁, TA₁₂, TA₂, and TAₙ. As illustrated, the tables include a number of different columns which are shown to lie behind each other and each of which column represents a possible frame type carrying an array of stream elements belonging to incoming data streams A.

A table TA₁ belonging to a carrying data stream A₁ describes the data stream A₁. The figure shows that different positions in the table TA₁ refer to the data streams A₁₁, A₁₂, A₁₃ carried by the carrying data stream A₁. Fig. 3 also shows that the table TA₁₂ describing the data stream A₁₂ also describes the data streams A₁₂₁, A₁₂₂, A₁₂₃ carried by the carrying data stream A₁₂.

This allows the recursive relationship between different data streams to be read from associated tables.

The first set of tables TA describe the data streams A₁, A₂, Aₙ, A₁₁, A₁₂, A₁₃, A₁₁₁, A₁₁₂, A₁₂₁, A₁₂₂, A₁₂₃ that are included in the array of incoming data streams A in all recursion depths to be handled. Similarly, the second set of tables describe the data streams that are included in the array of outgoing data streams B in all recursion depths to be handled.

By requisite recursion depths for what shall be handled is meant that at least those data streams which need to be shown in order to form outgoing data streams are shown in the representation constituted by the first and the second set of tables respectively.

Similarly, by requisite recursion depth concerning the array of outgoing data streams B is meant that carried data streams need not be seen in connection with forming the outgoing data streams and neither need they be seen in the representation constituted by the second set of tables TB.

Figure 4 shows that stream elements belonging to a data stream A₁₃ included in the array of incoming data streams A can be replicated to form two or more stream elements belonging to carried data streams B₁₂, B₁₄, B₂₃, Bₙ₁ in one or more different carrying data streams B₁, B₂, Bₙ belonging to the array of outgoing data streams B, in accordance with the invention. This provides the possibility of a so-called multicast, where stream elements belonging to a data stream can be organised to form a plurality of stream element replicas in forming the array of outgoing data streams.

Those data streams that are included in both the incoming and the outgoing data streams can be changed in control time, for instance by removing certain data streams from and adding data streams to an existing data stream that shall be forwarded to other, new receivers in addition to earlier receivers, or by removing one or more receivers of an existing data stream as a receiver for this particular data stream. Such changes are reflected by adding, changing or removing descriptions of frame types in the tables TA and TB. According to the invention, the validity of respective tables TA, TB is maintained by means of one or more control units 2 according to fig. 1.

The co-action of these control devices 2 with different so-called table-operated devices is illustrated in Swedish Patent Application SE-99 04857-1, and the person skilled in this art will be able to apply this co-action with a method or an arrangement according to the present invention on the basis of this description. The manner in which the validity of the tables used is maintained will therefore not be discussed further in this description.

It will be understood, however, the control stream 21 required to maintain this validity can belong to the array of incoming data streams A, and that the control stream 21 need not necessarily belong to the array of outgoing data streams B when communication takes place from the control unit 2 to the arrangement 1. Similarly, said control stream 21 may belong to the array of outgoing data streams B whilst not necessarily belonging to the array of incoming data streams A when communication takes place from the arrangement 1 to the control unit 2.

According to one preferred embodiment of the present invention as illustrated in fig. 5, respective carried data streams A₁, a sequence of related stream elements, and carrying data streams A₁ are organised in frames in accordance with the frame multiplexing principle. The tables included in the two sets of tables TA, TB consist of frame-describing tables that describe permitted frame structures.

A frame having a frame structure 11 includes stream elements 11A₁₁, 11A₁₂, 11A₁₃ belonging to carried data streams A₁₁, A₁₂, A₁₃. Each frame structure provides a frame space that includes information IA₁ required for pointing-out relevant frame structures included in the table.

Frame multiplexing is used to combine stream elements 11A₁₁, 11A₁₂, 11A₁₃ belonging to carried data streams A₁₁, A₁₂, A₁₃ in a common frame structure 11 in a carrying data stream A₁.

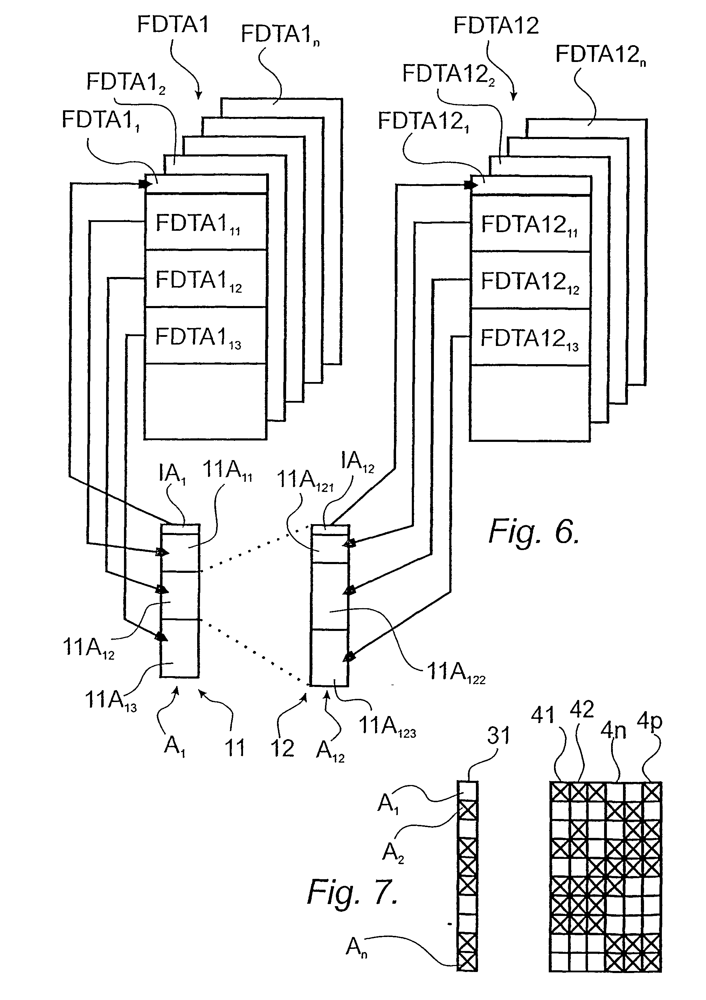

As indicated in fig. 6, the information IA1 for pointing out relevant frame structures is comprised of a reference or of a pointer pointing to a position FDT1 in a frame-describing table FDTA1. This table consists of a number of positions FDTA1₁, FDTA1₂, ..., FDTA1ₙ in the frame-descnbing table, shown in fig. 1 as columns placed one behind the other. Each position or column represents a possible frame structure for the data stream described by the table.

The pointer IA need only consist of an address, or an address reference, meaning that it need only take up a very small space in the frame structure 11.

It will be understood that when one or more carrying data streams solely carry frames having one sort of frame structure, the associated frame-describing table will consist only of one column that describes this single frame structure. In this case, no information is required in the frame for pointing-out the single column in the table. This case can be used prior to handling, e.g , multiplexed streams where carried streams correspond to time slots.

Respective positions or columns FDTA1₁, FDTA1₂, ..., FDTA1ₙ in the frame-describing table FDTA1 include a plurality of items FDTA1₁₁, FDTA1₁₂, FDTA1₁₃ where the frame structure 11 includes an item for each stream element 11A₁₁, 11A₁₂, 11A₁₃. These items FDTA1₁₁, FDTA1₁₂, FDTA1₁₃, denote the positions of respective stream elements 11A₁₁, 11A₁₂, 11A₁₃ in the frame, the magnitude of respective stream elements, and the data stream A₁₁, A₁₂, A₁₃ to which respective stream elements 11A₁₁, 11A₁₂, 11A₁₃ belong.

Figure 6 also shows how recursively multiplexed data streams are represented in connection with frame multiplexing. It is shown here that the carrying data stream A₁ carries the data stream A₁₂, among other things. The item or entry FDTA1₁₂ in the column FDTA1₁ concerned with respect to the carrying data stream A₁ indicates that it is a stream element belonging to the data stream A₁₂ carried in this part of the frame structure. Thus, it is known which table shall be used to interpret this stream element, namely the frame-describing table FDTA12.

According to the frame multiplexing principle, this stream element is comprised of a stream that has a frame structure 12 for the data stream A12. This frame contains information 1A₁₂, which enables a correct position or column FDTA12₁ to be pointed-out in the frame-describing table FDTA12 for correct interpretation in accordance with said frame structure 12.

This column FDTA12₁ contains items, or entries, FDTA12₁₁, FDTA12₁₂, FDTA12₁₃, which, in turn, describe the content of the stream elements carried by the data stream A12 in accordance with said frame structure 12, and which thus identify and describe the carried data streams A₁₂₁, A₁₂₂ and A₁₂₃.

Figure 7 illustrates a preferred embodiment of the present invention in which a presence vector 31 corresponding to all incoming stream elements at all recursion depths belonging to the incoming array of data streams A can be derived with a starting point from incoming stream elements and the first set of frame-describing tables TA.

Moreover, permitted frame structures for outgoing carrying data streams included in B at all recursion depths may be represented by alternative frame element vectors 41, 42, ..., 4n, ..., 4p, where each position in a frame element vector shows which streams are carried by an array of outgoing data streams and which of these carried data streams are included in respective frame formats for the outgoing carrying data streams. The frame element vectors may include all data streams included in B or may be divided so that each given array of data streams included in B is represented by a separate array of alternative frame element vectors.

Those data streams which are found represented in an incoming frame 11 are marked as present in the presence vector 31, shown schematically as x in given positions in the illustrated presence vector. Thus, the presence vector 31 represents the current transmission requirement.

This enables frame structures that correspond to the current transmission requirement to be chosen for each carrying data stream belonging to outgoing data streams B, by matching between available frame element vectors 41, 42, ..., 4n, 4p and the current presence vector 31. The figure shows that frame element vector 4n matches the current presence vector 31.

This embodiment requires interpretation of the stream elements belonging to the data streams A included in incoming frames, and for this interpretation to be converted to a presence vector 31, which is then matched to different frame element vectors 41, 42, 4n, so as to find a requisite frame structure for the various outgoing data streams B.

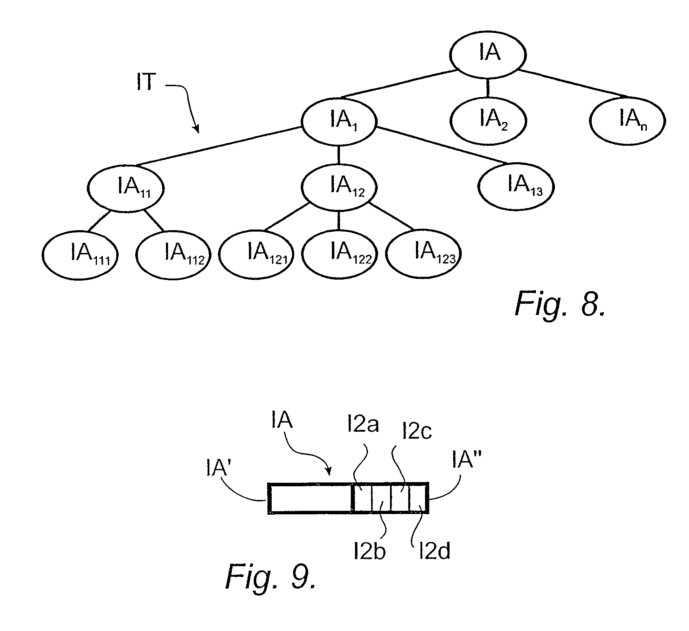

According to an alternative embodiment shown in fig. 8, it is also possible to derive a tree structure IT, such as an index tree, from respective information for pointing-out IA for incoming frames, wherein the frame structure for outgoing carrying data streams B is formed with a starting point from this tree structure IT.

The figure shows a tree structure IT which represents incoming data streams A, where the tree root consists of a node which represents the information or the index IA for a conceivable frame structure that includes all incoming data streams. This node IA is coupled in the tree structure to nodes that represent the information or the index IA₁, IA₁₁, IA₁₂, IA₁₃, IA₂ and IAₙ relating to the incoming data streams A.

Moreover, respective nodes are coupled to nodes that represent data streams which are carried by the data stream represented by the node For example, the node IA₁₂ is coupled to nodes that represent the information or the index IA₁₂₁, IA₁₂₂, IA₁₂₃ relating to the data streams A₁₂₁, A₁₂₂ and A₁₂₃ carried by this data stream.

It will be understood that when a stream is comprised of a simple data stream, in other words of a data stream that is not a carrying data stream *per se*, said simple data streams constitute so-called leaf nodes in a tree structure according to the above. However, these need not be represented in a tree structure of the kind represented here, since all of these simple data streams are known by the information or the index belonging to said carrying data stream, through the medium of a node that represents a data stream which, itself, carries simple data streams.

The forms that can be assumed by the index tree IT are determined in control time, and there is tied to each index tree form information relating to those frame formats that shall be chosen for outgoing stream elements belonging to B₁, B₂, Bₙ

This embodiment enables an index tree IT to be formed directly from the pointing information, i e. the table index IA belonging to incoming frames, without needing to examine and interpret the simple data streams included among incoming data streams A. Correct frame structures for outgoing data streams B₁, B₂, Bₙ can then be derived from said tree structure IT.

Figure 9 illustrates a preferred embodiment in which the pointing information or the index IA belonging to a used frame-describing table for incoming carrying data streams and/or for outgoing carrying data streams is divided into two parts IA' IA". A first part IA' constitutes a reference to a position in the frame-describing table FDTA, and a second part IA" includes a mask I2a, I2b, I2c, I2d whereby a number of data streams can be defined, such as can be transmitted with relevant frame structures.

This enables data streams that are continuous over a longer period of time to be represented in different positions in the frame-describing table, and to enable groups of burst-like streams to be represented by a position in the mask 12, said mask being easily adapted from frame to frame.

The present invention also relates to an arrangement. Referring back to fig. 1, there is shown an arrangement 1 which is adapted to form continuously an array of outgoing data streams B on the basis of a selectable array of incoming data streams A.

The arrangement 1 is adapted to operate in accordance with the described method and those features required of such an arrangement in this regard will be described in the following text.

A local memory 1m belonging to the arrangement 1 has stored therein a first set of tables TA and a second set of tables TB.

The first set of tables TA is adapted to describe stream elements belonging to those data streams that are included in the array of incoming data streams A, and the second set of tables TB is adapted to describe stream elements belonging to those data streams that are included in the array of outgoing data streams B.

The arrangement 1 is adapted to derive from the first and the second set of tables TA, TB, information as to how data streams shall be routed through the arrangement, either directly or indirectly.

The arrangement 1 is adapted to handle data streams that form multiplexed data streams, as illustrated in fig. 2, and also data streams that are multiplexed recursively in one another, i.e. so that a carried data stream can, itself, carry data streams by virtue of said stream elements forming frames that carry other stream elements.

As illustrated in connection with the method and with reference to fig. 3, a table TA₁ belonging to a carrying data stream A₁ is adapted to refer to tables TA₁₁, TA₁₂, TA₁₃ that describe the data streams A₁₁, A₁₂, A₁₃ carried by said carrying data stream.

The first and the second data tables TA, TB are also adapted in respect of the arrangement 1, to describe those data streams that are included in the respective arrays of incoming and outgoing data streams A, B in all recursion depths to be handled by the arrangement 1.

With the intention of providing a multicasting facility, an inventive arrangement 1, illustrated in fig 4, is adapted for replication of stream elements belonging to a data stream A₁₃ associated with the array of incoming data streams A, to form two or more stream elements belonging to carried data streams B₁₂, B₁₄, B₂₃, Bₙ₁ in one or more different carrying data streams B₁, B₂, Bₙ belonging to the array of outgoing data streams B.

An inventive arrangement 1 is also adapted to co-act with one or more control units 2 with the intention of maintaining the validity of the two sets of tables TA, TB.

According to one preferred embodiment of the present invention, the arrangement 1 is comprised of a table-operated device conforming to the definition of table-driven devices given in Swedish Patent Application 99 04856-1.

Moreover, respective carried data streams A11 of the fig. 5 illustration are a sequence of interrelated stream elements 11A₁₁, where carrying data streams A₁ can be organised in frames 11. The tables included in the two sets of tables TA, TB are comprised of frame-describing tables that describe permitted frame structures.

Each such frame 11 may include stream elements 11A₁₁, 11A₁₂, 11A₁₃ belonging to one or more different carried data streams A₁₁, A₁₂, A₁₃.

Each frame structure allows a frame to include or to be associated with information required to enable the arrangement to point to a relevant frame structure for an incoming frame in the table belonging to a data stream.

In order to enable stream elements belonging to one or more different carried data streams to be gathered in a common frame 11 in a carrying data stream, an arrangement 1 according to the present invention is adapted to use frame multiplexing in accordance with the definition of frame multiplexing given Swedish Patent Application SE-9903808-5.

Figures 1 and 7 show that in accordance with one embodiment of the present invention it is possible to allow a first evaluating unit 3 to be adapted to derive from the first set of frame-describing tables TA a presence vector 31, which corresponds to all incoming carried data streams. Moreover, a frame element vector 41, 42, ..., 4n, 4p may be adapted to represent each permitted frame structure for respective outgoing carrying data stream included in B. This embodiment thus enables a first selecting unit 4 to be adapted to select a frame structure for each outgoing carrying data stream included in B, by matching between available frame element vectors 41, 42, ..., 4n, 4p and the presence vector 31.

Figures 1 and 8 illustrate another alternative embodiment of the present invention which allows a second evaluating unit 3' be adapted to derive a tree structure IT from respective pointer information or indexes IA for incoming frames, such as an index tree, and to permit a second selector unit 4' to be adapted to form the frame structure for outgoing carrying data streams B with a starting point from this tree structure TI.

Figure 9 illustrates an inventive arrangement 1 which is also adapted to permit said pointer information or index IA belonging to a frame-describing table used for incoming carrying data streams and/or for outgoing carrying data streams to be divided into two parts, of which a first part IA' is adapted to constitute a reference to one position in the frame-describing table FDTA, and a second part IA" is adapted to include a mask I2a, I2b, I23c, I2d that enables a number of data streams to be defined as being transmittable with current frame structures.

It will be understood that the invention is not restricted to the aforedescribed exemplifying embodiments thereof and that modifications can be made within the scope of the inventive concept as defined in the accompanying claims.

## Claims

1. A method of forming continuously a selectable array of outgoing data streams (B, B₁ ) from a selectable array of incoming data streams (A, A₁), the method including use of at least one set of tables for describing the data streams, **characterized by** descnbing a repetitive sequence of stream elements (11A₁₁ , 11A₁₂ , 11A₁₃ ) belonging to said array of incoming data streams (A, A₁ ) in a first set of frame-describing tables (TA); describing stream elements belonging to said array of outgoing data streams (B, B₁ ) in a second set of frame-describing tables (TB); arranging a subset of said incoming stream elements (11A₁₁ , 11A₁₂ , 11A₁₃ ) in outgoing stream elements forming frames in accordance with said second set of tables; in that each frame (11) includes stream elements belonging to one or more different carried data streams; and in that each frame includes or is associated with information (1A₁ ) required to point-out a relevant frame structure included in the table.

2. A method according to claim 1, **characterized in that** said data streams (A₁ ; A₁₁,A₁₂,A₁₃ , B₁ ; B₁₂ , B₁₄) may be multiplexed data streams; **in that** data streams (A₁ ;A₁₁ ;A₁₁₁ ) may be multiplexed recursively , in other words a carried data stream may itself carry data streams by virtue of its stream elements forming frames that carry other stream elements; and **in that** there belongs to a carrying data stream a table (TA₁ ;TA₁₁ ;TA₁₁₁ ) which refers to tables for those data streams carried by said carrying data stream which are in themselves carrying data streams.

3. A method according to claim 2, **characterized in that** said first and said second set of tables (TA,TB) describe those data streams that are included in said incoming data streams (A ,A₁) and said outgoing data streams (B ,B₁) respectively in at least those recursion depths to be handled.

4. A method according to any one of the preceding claims, **characterized by** replicating stream elements (A₁₃ ) affiliated with a data stream belonging to said incoming data streams (A₁ ) to form stream elements belonging to two or more carried data streams (B₁₂ ,B₁₄ ,B₂₃ ;Bₙ₁ ) in one or more different carrying data streams belonging to said outgoing data streams (B₁...Bₙ).

5. A method according to any one of the preceding claims, **characterized by** maintaining the validity of said first and said second set of tables (TA,TB) through the medium of one or more control units (2).

6. A method according to claim 5, **characterized in that** one or more carrying data streams carries/carry solely frames (11) of one frame structure; and **in that** the pointer information (IA₁) is absent from the frame in such cases.

7. A method according to claim 5 or 6, **characterized by** deriving from incoming stream elements and said first set of frame-describing tables (TA) a presence vector (31) which corresponds to all incoming stream elements at all recursion depths belonging to the incoming array of data streams (A); in that each permitted combination of frame structures for outgoing carrying data streams (B) is represented by a frame element vector (41,42...4p); and in that a frame structure is chosen for each outgoing carrying data stream (B) by matching between available frame element vectors and said presence vector.

8. A method according to claim 5 or 6, **characterized by** deriving from said pointer information (IA₁) in incoming frames a tree structure (IT), such as an index tree; and by forming the frame structure for outgoing data streams (B) on the basis of said tree structure (IT).

9. A method according to any one of claims 5 to 8, **characterized by** dividing pointer information (IA₁ ) relating to frames for incoming carrier data streams (A,A₁) and/or relating to outgoing carrier data streams (B), into two parts (IA', IA") of which a first part (IA') forms a reference to a position in an associated frame-describing table (FDTA) and the second part (IA") includes a mask (12a...12d) which enables a number of data streams to be defined as being transmittable with the frame structure in question.

10. An arrangement adapted to form continuously a selectable array of outgoing data streams (B, B₁) from a selectable array of incoming data streams (A , A₁), the arrangement (1) including at least one set of tables for describing the data streams, **characterized in that** a first set of frame-descnbing tables (TA) and a second set of frame-describing tables (TB) are stored in a local memory (1 m) belonging to said arrangement; **in that** said first set of tables is adapted to describe stream elements (11A₁₁ , 11A₁₂ , 11A₁₃ ) belonging to said incoming data streams; **in that** said second set of tables is adapted to describe stream elements belonging to said outgoing data streams (B,B₁); **in that** the contents of said tables reflect how data streams (A,A₁ ;B,B₁) shall be routed through said arrangement (1); **in that** a subset of stream elements (11A₁₁ , 11A₁₂ , 11A₁₃ ) belonging to incoming data streams are arranged in a repetitive sequence in stream elements forming frames in outgoing data streams (B,B₁) in accordance with said second set of tables (TB); **in that** said arrangement comprises a table-operated device; **in that** each frame (11) may include stream elements belonging to one or more different carried data streams; and **in that** each frame may include or be associated with requisite information (A₁) which enables said arrangement to point to a relevant frame structure in said table.

11. An arrangement according to claim 10, **characterized in that** said arrangement (1) is adapted to handle data streams (A₁ ; A₁₁,A₁₂,A₁₃ ; B₁ ; B₁₂, B₁₄) that constitute multiplexed data streams; **in that** said arrangement is adapted to handle data streams (A₁ ;A₁₁ ;A₁₁₁ ) that are multiplexed recursively, that is to say a carried data stream can, itself, carry data streams by virtue of its stream elements forming frames that carry other stream elements; and **in that** a table (TA₁,TA₁₁ ;TA₁₁₁ ) belonging to a carrying data stream is adapted to refer to tables for those data streams which are carried by this carrying data stream and which are in themselves carrying data streams.

12. An arrangement according to claim 11, **characterized in that** said first and said second set of tables (TA,TB) are adapted to describe those data streams which are included in said incoming and said outgoing data streams (A,A₁;B,B₁) respectively at all recursive depths to be handled by said arrangement (1).

13. An arrangement according to any one of claims 10 to 12, **characterized in that** said arrangement is adapted for the replication of stream elements (A₁₃) affiliated with a data stream (A₁) belonging to said incoming data streams to form two or more stream elements (B₁₂ ,B₁₄ ,B₂₃ ;Bₙ₁) belonging to carried data streams in one or more different carrying data streams belonging to said outgoing data streams (B₁...Bₙ).

14. An arrangement according to any one of claims 10 to 13, **characterized in that** said arrangement (1) is adapted to co-act with one or more control units (2) for the purpose of maintaining the validity of said first and said second set of tables (TA,TB).

15. An arrangement according to claim 14, **characterized in that** one or more carrying data streams is/are adapted to solely carry frames (11) of one frame structure; and **in that** said pointer information (IA₁) is not included in the frame in such cases.

16. An arrangement according to claim 14 or 15, **characterized by** a first evaluating unit (3) which is adapted to derive from incoming stream elements and from said first set of frame-describing tables (TA) a presence vector (31) which corresponds to all incoming stream elements at recursion depths belonging to the incoming array of data streams (A); in that a frame element vector (41, 42....4p) is adapted to represent each permitted combination of frame structures for outgoing carrying data streams (B); and in that a first selector unit (4) is adapted to select a frame structure for each outgoing carrying data stream (B) by matching between available frame element vectors and said presence vector (31).

17. An arrangement according to claims 14 or 15, **characterized by** a second evaluating unit (3') which is adapted to derive a tree structure (IT), such as an index tree, from said information (IA₁) for pointing in incoming frames; and by a second selector unit (4') which is adapted to form the frame structure of outgoing carrying data streams (B) on the basis of said tree structure (IT).

18. An arrangement according to any one of claims 14 to 16, **characterized in that** the pointer information (IA₁) belonging to frames for incoming carrying data streams (A,A₁) and/or for outgoing carrying data streams (B) is divided into two parts (IA',IA") of which a first part (IA') is adapted to constitute a reference to a position in an associated frame-describing table (FDTA) and a second part (IA") of which is adapted to include a mask (12a....12d) which enables a number of data streams to be defined as being transmittable with current frame structures.

## Patentansprüche

1. Verfahren zum kontinuierlichen Ausbilden eines auswahlbaren Feldes von ausgehenden Datenstromen (B, B₁) aus einem auswahlbaren Feld von eingehenden Datenströmen (A, A₁), wobei das Verfahren die Verwendung zumindest eines Tabellensatzes von beschreibenden Datenstromen beinhaltet, **gekennzeichnet durch** Beschreiben einer repetitiven Sequenz von Stromelementen (11A₁₁, 11A₁₂, 11A₁₃), die zu dem Feld eingehender Datenstrome (A, A₁) im ersten Satz von rahmenbeschreibenden Tabellen (TA) gehoren; Beschreiben von Stromelementen, die zu dem Feld von ausgehenden Datenstromen (B, B₁) in einem zweiten Satz von rahmenbeschreibenden Tabellen (TB) gehoren; Anordnen eines Subsatzes der eingehenden Stromelemente (11A₁₁, 11A₁₂, 11A₁₃) in ausgehenden Stromelementen, die Rahmen gemaß dem zweiten Tabellensatz bilden; wobei jeder Rahmen (11) Stromelemente enthalt, die zu einem oder mehreren unterschiedlichen getragenen Datenstromen gehoren und wobei jeder Rahmen Informationen (1A₁) enthalt oder mit ihnen assoziiert ist, die fur das Verweisen auf eine relative Rahmenstruktur, die in der Tabelle enthalten ist, benotigt werden.

2. Verfahren gemaß Anspruch 1, **dadurch gekennzeichnet, dass** die Datenströme (A₁; A₁₁, A₁₂, A₁₃; B₁; B₁₂, B₁₄) gemultiplexte Datenstrome sein konnen; dass Datenstrome (A₁; A₁₁; A₁₁₁) rekursiv gemultiplext sein konnen, anders ausgedrückt ein getragener Datenstrom selbst Datenstrome mittels seiner Stromelemente tragen kann, die Rahmen bilden, die andere Stromelemente tragen; und dass zu einem tragenden Datenstrom eine Tabelle (TA₁; TA₁₁; TA₁₁₁) gehort, die auf Tabellen fur solche, von dem tragenden Datenstrom getragenen Datenströme verweist; die selbst tragende Datenstrome sind.

3. Verfahren gemaß Anspruch 2, **dadurch gekennzeichnet, dass** der erste und zweite Tabellensatz (TA, TB) solche Datenströme beschreiben, die in den eingehenden Datenstromen (A, A₁) bzw. den ausgehenden Datenstromen (B, B₁) in zumindest den zu handhabenden Rekursionstiefen enthalten sind.

4. Verfahren gemaß einem der vorstehenden Ansprüche, **gekennzeichnet durch** replizierende Stromelemente (A₁₃), die mit einem zu den eingehenden Datenstromen (A₁) gehorenden Datenstrom verbunden sind, um Stromelemente, die zu zwei oder mehr getragenen Datenströmen (B₁₂, B₁₄, B₂₃; Bₙ₁) gehoren, in einen oder mehrere verschiedene tragende Datenstrome, die zu den ausgehenden Datenstromen (B₁...Bₙ) gehören, zu bilden.

5. Verfahren gemaß einem der vorstehenden Anspruche, **gekennzeichnet durch** Aufrechterhalten der Validitat der ersten und zweiten Tabellensätze (TA, TB) **durch** das Medium einer oder mehrerer Steuereinheiten (2).

6. Verfahren gemaß Anspruch 5, **dadurch gekennzeichnet, dass** eine oder mehr tragende Datenströme einzig Rahmen (11) einer Rahmenstruktur tragt/tragen und dass die Zeigerinformation (IA₁) im Rahmen in solchen Fallen fehlt.

7. Verfahren gemaß Anspruch 5 oder 6, **gekennzeichnet durch** Ableiten, aus den eingehenden Stromelementen und dem ersten Satz rahmenbeschreibender Tabellen (TA), eines Anwesenheitsvektors (31), der eingehenden Stromelementen bei allen Rekursionstiefen entspricht, die zum eingehenden Feld von Datenstromen (A) gehoren; **dadurch**, dass jede erlaubte Kombination von Rahmenstrukturen für ausgehende tragende Datenstrome (B) **durch** einen Rahmenelementvektor (41, 42...4p) repräsentiert wird und dass eine Rahmenstruktur fur jeden ausgehenden tragenden Datenstrom (B) ausgewahlt wird, indem zwischen verfügbaren Rahmenelementvektoren und dem Anwesenheitsvektor abgeglichen wird.

8. Verfahren gemaß Anspruch 5 oder 6, **gekennzeichnet durch** Ableiten, von der Zeigerinformation (IA₁) in eingehenden Rahmen, einer Baumstruktur (IT), wie etwa eines Indexbaums, und **durch** Bilden der Rahmenstruktur fur ausgehende Datenstrome (B) auf Basis der Baumstruktur (IT).

9. Verfahren gemaß einem der Anspruche 5 bis 8, **gekennzeichnet durch** Unterteilen von Zeigerinformation (IA₁), die sich auf Rahmen für eingehende Tragerdatenstrome (A, A₁) bezieht und/oder sich auf ausgehende Tragerdatenstrome (B) bezieht, in zwei Teile (IA', IA"), von denen ein erster Teil (IA') eine Referenz auf eine Position in einer assoziierten rahmenbeschreibenden Tabelle (FDTA) bildet und ein zweiter Teil (IA") eine Maske (12a...12d) enthalt, die es einer Anzahl von Datenstromen ermoglicht, als mit der fraglichen Rahmenstruktur ubertragbar definiert zu sein.

10. Anordnung, die dafur ausgelegt ist, kontinuierlich ein auswahlbares Feld von ausgehenden Datenstromen (B, B₁) aus einem auswahlbaren Feld eingehender Datenstrome (A, A₁) zu bilden, wobei die Anordnung (1) zumindest einen Tabellensatz zum Beschreiben der Datenstrome enthalt, **dadurch gekennzeichnet, dass** ein erster Satz von rahmenbeschreibenden Tabellen (TA) und ein zweiter Satz von rahmenbeschreibenden Tabellen (TB) in einem lokalen Speicher (1m) gespeichert werden, der zur Anordnung gehort; dass der erste Tabellensatz dafur ausgelegt ist, Stromelemente (11A₁₁, 11A₁₂, 11A₁₃) zu beschreiben, die zu den eingehenden Datenströmen gehoren; dass der zweite Tabellensatz dafür ausgelegt ist, Stromelemente zu beschreiben, die zu den ausgehenden Datenstromen (B, B₁) gehoren; dass der Inhalt der Tabellen reflektiert, wie Datenstrome (A, A₁; B, B₁) durch die Anordnung (1) geroutet werden sollen; dass ein Subsatz von Stromelementen (11A₁₁, 11A₁₂, 11A₁₃), die zu eingehenden Datenstromen gehoren, in einer repetitiven Sequenz in Stromelementen angeordnet sind, die Rahmen in ausgehenden Datenströmen (B, B₁) gemaß dem zweiten Tabellensatz (TB) bilden; dass die Anordnung eine tabellenbetriebene Vorrichtung umfasst; dass jeder Rahmen (11) Stromelemente enthalten kann, die zu einem oder mehr verschiedenen getragenen Datenstromen gehören; und dass jeder Rahmen benotigte Information (A₁) enthält oder damit assoziiert ist, welche der Anordnung ermoglicht, auf eine relative Rahmenstruktur in der Tabelle zu verweisen.

11. Anordnung gemaß Anspruch 10, **dadurch gekennzeichnet, dass** die Anordnung (1) dafur ausgelegt ist, Datenstrome (A₁; A₁₁, A₁₂, A₁₃; B₁; B₁₂, B₁₄) zu handhaben, die gemultiplexte Datenströme bilden; dass die Anordnung dafur ausgelegt ist, Datenströme (A₁; A₁₁; A₁₁₁) zu handhaben, die rekursiv gemultiplext sind, d.h. dass ein getragener Datenstrom selbst Datenstrome vermittels seiner Stromelemente tragen kann, die Rahmen bilden, welche andere Stromelemente tragen; und dass eine Tabelle (TA₁; TA₁₁; TA₁₁₁), die zu einem tragenden Datenstrom gehort, dafur ausgelegt ist, auf Tabellen fur solche Datenströme zu verweisen, die von diesem tragenden Datenstrom getragen werden und die selbst tragende Datenstrome sind.

12. Anordnung gemäß Anspruch 11, **dadurch gekennzeichnet, dass** der erste und zweite Tabellensatz (TA, TB) dafur ausgelegt sind, solche Datenstrome zu beschreiben, die in den eingehenden und ausgehenden Datenstromen (A, A₁; B, B₁) jeweils bei allen von der Anordnung (1) zu handhabenden rekursiven Tiefen enthalten sind.

13. Anordnung gemäß einem der Anspruche 10 bis 12, **dadurch gekennzeichnet, dass** die Anordnung fur die Replikation von Stromelementen (A₁₃) ausgelegt ist, die mit einem Datenstrom (A₁), der zu den eingehenden Datenströmen gehort, verbunden ist, um zwei oder mehr Stromelemente (B₁₂, B₁₄, B₂₃; Bₙ₁), die zu den getragenen Datenströmen gehoren, in einen oder mehr verschiedene tragende Datenstrome, die zu den ausgehenden Datenströmen (B₁...Bₙ) gehoren, auszubilden.

14. Anordnung gemaß einem der Ansprüche 10 bis 13, **dadurch gekennzeichnet, dass** die Anordnung (1) dafur ausgelegt ist, mit einer oder mehr Steuereinheiten (2) zum Zweck des Aufrechterhaltens der Validität der ersten und zweiten Tabellensatze (TA, TB) zu koagieren.

15. Anordnung gemäß Anspruch 14, **dadurch gekennzeichnet, dass** ein oder mehrere tragende Datenstrome dafur ausgelegt ist/sind, einzig Rahmen (11) einer Rahmenstruktur zu tragen, und dass die Zeigerinformation (IA₁) in solchen Fallen nicht im Rahmen enthalten ist.

16. Anordnung gemaß Anspruch 14 oder 15, **gekennzeichnet durch** eine erste Evaluierungseinheit (3), die dafur ausgelegt ist, aus eingehenden Stromelementen und aus dem ersten Satz rahmenbeschreibender Tabellen (TA) einen Anwesenheitsvektor (31) abzuleiten, der allen eingehenden Stromelementen bei zu dem eingehenden Feld von Datenströmen (A) gehörenden Rekursionstiefen entspricht; **dadurch**, dass ein Rahmenelementvektor (41, 42...4p) dafur ausgelegt ist, jede erlaubte Kombination von Rahmenstruktur fur ausgehende tragende Datenstrome (B) zu repräsentieren; und dass eine erste Selektoreinheit (4) dafür ausgelegt ist, eine Rahmenstruktur fur jeden ausgehenden tragenden Datenstrom (B) auszuwählen, indem sie zwischen verfugbaren Rahmenelementvektoren und dem Anwesenheitsvektor (31) abgleicht.

17. Anordnung gemaß den Ansprüchen 14 oder 15, **gekennzeichnet durch** eine zweite Evaluierungseinheit (3'), die dafur ausgelegt ist, eine Baumstruktur (IT), wie etwa einen Indexbaum, aus der Information (IA₁) zum Zeigen in eingehende Rahmen abzuleiten; und **durch** eine zweite Auswahleinheit (4'), die dafür ausgelegt ist, die Rahmenstruktur von ausgehenden tragenden Datenstromen (B) auf der Basis der Baumstruktur (IC) zu bilden.

18. Anordnung gemäß einem der Anspruche 14 bis 16, **dadurch gekennzeichnet, dass** die Zeigerinformation (IA₁), die zu Rahmen für eingehende tragende Datenströme (A, A₁) und/oder fur ausgehende tragende Datenstrome (B) gehört, in zwei Teile (IA', IA") unterteilt ist, von welchen ein erster Teil (IA') dafur ausgelegt ist, eine Referenz auf eine Position in einer assoziierten, rahmenbeschreibenden Tabelle (FDTA) zu bilden und ein zweiter Teil (IA") dafur ausgelegt ist, eine Maske (12a...12d) zu enthalten, die es einer Anzahl von Datenstromen gestattet, als mit derzeitigen Rahmenstrukturen ubertragbar definiert zu werden.

## Revendications

1. Procédé de formation en continu d'un groupement pouvant être choisi de flux de données (B, B₁) sortants à partir d'un groupement pouvant être choisi de flux de données (A, A₁) entrants, le procédé comprenant l'utilisation d'au moins un ensemble de tables destinées à décrire les flux de données, **caractérisé par** la description d'une séquence répétitive d'éléments (11A₁₁, 11A₁₂, 11A₁₃) de flux appartenant audit groupement de flux de données (A, A₁) entrants dans un premier ensemble de tables (TA) de description de trame ; par la description d'éléments de flux appartenant audit groupement de flux de données (B, B₁) sortants dans un second ensemble de tables (TB) de description de trame ; par l'agencement d'un sous-ensemble desdits éléments (11A₁₁, 11A₁₂, 11A₁₃) de flux entrants dans des éléments de flux sortants en formant des trames en fonction dudit second ensemble de tables ; en ce que chaque trame (11) contient des éléments de flux appartenant à un ou plusieurs flux de données différents transportés ; et en ce que chaque trame contient ou est associée à de l'information (1A₁) nécessaire pour indiquer une structure pertinente de trame incluse dans la table.

2. Procédé selon la revendication 1, **caractérisé en ce que** lesdits flux de données (A₁ ; A₁₁, A₁₂, A₁₃ ; B₁ ; B₁₂, B₁₄) peuvent être des flux de données multiplexés ; **en ce que** les flux de données (A₁ ; A₁₁ ; A₁₁₁) peuvent être multiplexés de façon récurrente, en d'autres termes, un flux de données transporté peut lui-même transporter des flux de données du fait que ses éléments de flux forment des trames qui transportent d'autres éléments de flux ; et **en ce qu'**ils appartiennent à une table (TA₁ ; TA₁₁ ; TA₁₁₁) de flux de données transportants qui se réfère à des tables pour les flux de données transportés par ledit flux de données transportant qui eux-mêmes transportent des flux de données.

3. Procédé selon la revendication 2, **caractérisé en ce que** ledit premier et ledit second ensemble de tables (TA, TB) décrivent les flux de données qui sont inclus dans lesdits flux de données (A, A₁) entrants et dans lesdits flux de données (B, B₁) sortants, respectivement, dans au moins les profondeurs de récurrence à traiter.

4. Procédé selon l'une quelconque des revendications précédentes, **caractérisé par** la réplication des éléments (A₁₃) de flux affiliés à un flux de données appartenant auxdits flux de données (A₁) entrants pour former des éléments de flux appartenant à au moins deux flux de données (B₁₂, B₁₄, B₂₃ ; Bₙ₁) transportés dans un ou plusieurs flux de données différents transportants appartenant auxdits flux de données (B₁ ... Bₙ) sortants.

5. Procédé selon l'une quelconque des revendications précédentes, **caractérisé par** l'entretien de la validité dudit premier et dudit second ensemble de tables (TA, TB) par le moyen d'une ou plusieurs unités (2) de commande.

6. Procédé selon la revendication 5, **caractérisé en ce qu'**un ou plusieurs flux de données transportants transportent uniquement des trames (11) d'une même structure de trame ; et **en ce que** l'information (IA₁) de pointeur est, dans ce cas, absente de la trame.

7. Procédé selon la revendication 5 ou 6, **caractérisé par** l'obtention, à partir des éléments de flux entrants et dudit premier ensemble de tables (TA) de description de trame, d'un vecteur (31) de présence qui correspond à tous les éléments de flux entrants à toutes les profondeurs de récurrence appartenant au groupement entrant de flux de données (A) ; en ce que chaque combinaison autorisée de structures de trame pour des flux de données (B) transportants sortants est représentée par un vecteur (41, 42 ... 4p) d'élément de trame ; et en ce que l'on choisit une structure de trame pour chaque flux de données (B) transportant sortant par concordance entre des vecteurs disponibles d'élément de trame et ledit vecteur de présence.

8. Procédé selon la revendication 5 ou 6, **caractérisé par** l'obtention, à partir de ladite information (IA₁) de pointeur de trames entrantes, d'une structure (IT) d'arborescence, comme une arborescence d'index ; et par la formation de la structure de trame pour des flux de données (B) sortants sur la base de ladite structure (IT) d'arborescence.

9. Procédé selon l'une quelconque des revendications 5 à 8, **caractérisé par** la division de l'information (IA₁) de pointeur se rapportant à des trames pour des flux de données (A, A₁) transporteurs entrants et/ou se rapportant à des flux de données (B) transporteurs sortants, en deux parties (IA', IA") dont une première partie (IA') forme une référence à une position dans une table associée (FDTA) de description de trame et dont la seconde partie (IA") inclut un masque (12a ... 12d), ce qui permet à un certain nombre de flux de données d'être définis comme étant transmissibles avec la structure de trame en question.

10. Agencement adapté à former en continu un groupement pouvant être choisi de flux de données (B, B₁) à partir d'un groupement pouvant être choisi de flux de données (A, A₁), l'agencement (1) incluant au moins un ensemble de tables destinées à décrire les flux de données, **caractérisé en ce qu'**un premier ensemble de tables (TA) de description de trame et un second ensemble de tables (TB) de description de trame sont mémorisés dans une mémoire locale (1m) appartenant audit agencement ; **en ce que** ledit premier ensemble de tables est adapté à décrire des éléments (11A₁₁, 11A₁₂, 11A₁₃) appartenant auxdits flux de données entrants ; **en ce que** ledit second ensemble de tables est adapté à décrire des éléments de flux appartenant auxdits flux de données (B, B1) sortants ; **en ce que** le contenu desdites tables reflète la façon dont les flux de données (A, A₁ ; B, B₁) seront acheminés à travers ledit agencement (1) ; **en ce qu'**un sous-ensemble des éléments (11A₁₁, 11A₁₂, 11A₁₃) de flux appartenant à des flux de données entrants est agencé dans une séquence répétitive en éléments de flux formant des trames dans des flux de données (B, B₁) sortants en fonction dudit second ensemble de tables (TB) ; **en ce que** ledit agencement comprend un dispositif mis en oeuvre par tables ; **en ce que** chaque trame (11) peut comprendre des éléments de flux appartenant à un ou plusieurs flux de données différents transportés ; et **en ce que** chaque trame peut comprendre ou être associée à de l'information requise (A₁) qui permet audit agencement de pointer vers une structure pertinente de trame de ladite table.

11. Agencement selon la revendication 10, **caractérisé en ce que** ledit agencement (1) est adapté à traiter des flux de données (A₁ ; A₁₁, A₁₂, A₁₃ ; B₁ ; B₁₂, B₁₄) qui constituent des flux de données multiplexés ; **en ce que** ledit agencement est adapté à traiter des flux de données (A₁ ; A₁₁ ; A₁₁₁) qui sont multiplexés de façon récurrente, c'est-à-dire qu'un flux de données transporté peut, lui-même, transporter des flux de données du fait que ses éléments de flux forment des trames qui transportent d'autres éléments de flux ; et **en ce qu'**une table (TA₁ ; TA₁₁ ; TA₁₁₁) appartenant à un flux de données transportant est adapté à se référer à des tables pour les flux de données qui sont transportés par ce flux de données transportant et qui eux-mêmes transportent des flux de données.

12. Agencement selon la revendication 11, **caractérisé en ce que** ledit premier et ledit second ensemble de tables (TA, TB) sont adaptés à décrire les flux de données qui sont inclus dans lesdits flux de données (A, A₁ ; B, B₁) entrants et sortants, respectivement, à toutes les profondeurs de récurrence à traiter par ledit agencement (1).

13. Agencement selon l'une quelconque des revendications 10 à 12, **caractérisé en ce que** ledit agencement est rendu apte à la réplication des éléments (A₁₃) de flux affiliés à un flux de données (A₁) appartenant auxdits flux de données entrants pour former au moins deux éléments (B₁₂, B₁₄, B₂₃ ; Bₙ₁) de flux appartenant à des flux de données transportés dans un ou plusieurs flux de données différents transportants appartenant auxdits flux de données (B₁ ... Bₙ) sortants.

14. Agencement selon l'une quelconque des revendications 10 à 13, **caractérisé en ce que** ledit agencement (1) est rendu apte à coopérer avec une ou plusieurs unités (2) de commande dans le but d'entretenir la validité dudit premier et dudit second ensemble de tables (TA, TB).

15. Agencement selon la revendication 14, **caractérisé en ce qu'**un ou plusieurs flux de données transportants sont rendus aptes à transporter uniquement des trames (11) d'une même structure de trame ; et **en ce que** ladite information (IA₁) de pointeur n'est pas, dans ce cas, incluse dans la trame.

16. Agencement selon la revendication 14 ou 15, **caractérisé par** une première unité (3) d'évaluation qui est rendu apte à obtenir, à partir des éléments de flux entrants et dudit premier ensemble de tables (TA) de description de trame, un vecteur (31) de présence qui correspond à tous les éléments de flux entrants à des profondeurs de récurrence appartenant au groupement entrant de flux de données (A) ; en ce qu'un vecteur (41, 42 ... 4p) d'élément de trame est adapté à représenter chaque combinaison autorisée de structures de trame pour des flux de données (B) transportants sortants ; et en ce qu'une première unité (4) de choix est adaptée à choisir une structure de trame pour chaque flux de données (B) transportant sortant par concordance entre des vecteurs disponibles d'élément de trame et ledit vecteur (31) de présence.

17. Agencement selon les revendications 14 ou 15, **caractérisé par** une seconde unité (3') d'évaluation qui est rendu apte à obtenir, de ladite information (IA₁) destinée à pointer dans des trames entrantes, une structure (IT) d'arborescence, comme une arborescence d'index ; et par une seconde unité (4') de choix qui est rendue apte à former la structure de trame de flux de données (B) sortants sur la base de ladite structure (IT) d'arborescence.

18. Agencement selon l'une quelconque des revendications 14 à 16, **caractérisé en ce que** l'information (IA₁) de pointeur appartenant à des trames pour des flux de données (A, A₁) transportants entrants et/ou pour des flux de données (B) transportants sortants, est divisée en deux parties (IA', IA") dont une première partie (IA') est rendue apte à constituer une référence à une position dans une table associée (FDTA) de description de trame et dont une seconde partie (IA") est rendue apte à inclure un masque (12a ... 12d) ce qui permet à un certain nombre de flux de données d'être définis comme étant transmissibles avec des structures courantes de trame.
